(19) Europäisches Patentamt
European Patent Office
Office européen des brevets

(11) **EP 1 852 992 A1**

(12) **EUROPEAN PATENT APPLICATION**
published in accordance with Art. 158(3) EPC

(43) Date of publication:
**07.11.2007 Bulletin 2007/45**

(51) Int Cl.:
*H04J 15/00* (2006.01)      *H04L 1/16* (2006.01)
*H04L 1/18* (2006.01)      *H04L 1/00* (2006.01)

(21) Application number: **06715622.4**

(22) Date of filing: **13.03.2006**

(86) International application number:
**PCT/JP2006/304899**

(87) International publication number:
**WO 2006/095904 (14.09.2006 Gazette 2006/37)**

(84) Designated Contracting States:
**DE FR GB**

(30) Priority: **11.03.2005  CN 200510054755**

(71) Applicant: **MATSUSHITA ELECTRIC INDUSTRIAL CO., LTD.**
**Osaka 571-8501 (JP)**

(72) Inventors:
• **SHE, Xiaoming**
**Matsushita Electric Ind. Co.Ltd**
**2-1-61, Shiromi, Chuo-ku**
**Osaka 540-6207 (JP)**

• **LI, Jifeng**
**Matsushita Electric Ind. Co.Ltd**
**2-1-61, Shiromi, Chuo-ku**
**Osaka 540-6207 (JP)**

(74) Representative: **Grünecker, Kinkeldey,**
**Stockmair & Schwanhäusser**
**Anwaltssozietät**
**Maximilianstrasse 58**
**80538 München (DE)**

(54) **RETRANSMITTING METHOD, RADIO RECEIVING APPARATUS, AND MULTIANTENNA RADIO COMMUNICATION SYSTEM**

(57)      A retransmitting method, a radio receiving apparatus and a multiantenna communication system that are capable of improving the system throughput. According to this method, the receiving apparatus determines whether a received substream has an error and hence a retransmittal is necessary (401); calculates a signal-to-interference noise ratio after detection of multiinput/multioutput of the substream that must be retransmitted (402); compares the signal-to-interference noise ratio of the substream, which must be retransmitted, with a predetermined threshold value (403); performs a full retransmission of the substream, which must be retransmitted, when the signal-to-interference noise ratio of the substream, which must be retransmitted, is smaller than the predetermined threshold value (404); and performs a redundant-increased retransmission of the substream, which must be retransmitted, when the signal-to-interference noise ratio of the substream, which must be retransmitted, is greater than the predetermined threshold value (405,406,407).

FIG.3

**Description**

Technical Field

The present invention relates to an automatic retransmission technique for a multi-antenna radio communication system, and specifically relates to a retransmission method, radio receiving apparatus, and multi-antenna radio communication system capable of improving throughput of a multi-antenna communication system.

Background Art

The continued increase on demands for an information transmission rate is one of the important issues that a future radio communication system will be faced with. A multi-input and multi-output (MIMO) technique is already indispensable to the future radio communication system in order to implement a high information transmission rate using limited frequency resources. In the MIMO system, the transmitting side divides the transmission data into a plurality of sub-streams, the plurality of sub-streams are transmitted using a plurality of transmitting antennas, and the receiving side receives spatial multiplexed signals including a plurality of sub-streams using a plurality of receiving antennas. The MIMO technique is capable of substantially improving channel capacity compared to single antenna transmission methods of the related art, and it is possible to improve the information transmission rate.

MIMO systems of the related art carry out cyclic redundancy checks (CRC) on the transmitting side so that it is possible to detect whether or not there is an error in a sub-stream received at the receiving side. CRC encoding is processing for appending several CRC bits to an end of a sub-stream transmitted on the transmitting side. The receiving side then carries out CRC decoding, and detects whether or not there is an error bit in the received sub-stream using the CRC bits appended to the end of the sub-stream. However, processing for CRC encoding and CRC decoding is not capable of detecting the number of error bits and the specific positions of the error bits in the sub-stream. Therefore, with an MIMO system of the related art, when a given sub-stream still includes an error bit after reception processing, the whole data of the sub-stream is retransmitted one more time.

Disclosure of Invention

However, in reality, when an error is detected in a sub-stream on the receiving side, it is likely that the number of error bits in the sub-stream is small, and it is more likely that the number of error bits is small especially when channel characteristics are good. With a method of retransmitting the whole data of the sub-stream including the error bits in the above-described MIMO system, a large number of bits within the sub-stream that are properly received are retransmitted. Therefore, there is a problem that system throughput is damaged.

In order to resolve this situation, it is therefore an object of the present invention to provide a retransmission method, radio receiving apparatus, and multi-antenna radio communication system capable of avoiding uniform retransmission of the whole sub-stream when an error bit is detected in a received sub-stream, and improving system throughput.

A multi-antenna radio communication system of the present invention having a radio transmitting apparatus that transmits a plurality of sub-streams using a plurality of transmitting antennas and a radio receiving apparatus that receives the plurality of sub-streams using a plurality of receiving antennas according to the present invention, wherein the radio receiving apparatus has: a detection section that detects a sub-stream requiring retransmission out of the received plurality of sub-streams; a comparing section that compares an SINR of the sub-stream requiring retransmission with a predetermined threshold value; a determining section that determines a method of retransmitting the whole sub-stream requiring retransmission when the SINR of the sub-stream requiring retransmission is lower than the predetermined threshold value, and determines an incremental redundancy retransmission method for the sub-stream requiring retransmission when the SINR of the sub-stream requiring retransmission is higher than the predetermined threshold value; and a reporting section that reports information relating to the determined retransmission method to the radio transmitting apparatus; and the radio transmitting apparatus has a retransmission section that adaptively retransmits the whole or part of the sub-stream requiring retransmission based on information relating to the retransmission method reported from the radio receiving apparatus.

According to the present invention, when a sub-stream including an error bit is detected on the receiving side of the multi-antenna radio communication system, by retransmitting the whole sub-stream or retransmitting the part including an error bit, it is possible to improve system throughput.

Brief Description of Drawings

FIG.1 is a block diagram showing a configuration of MIMO radio communication system 100 according to an embodiment of the present invention;

FIG.2 is a block diagram showing a detailed configuration of a retransmission method and retransmission parameter determining section according to an embodiment of the present invention;

FIG.3 is a flowchart showing processing for a retransmission method according to an embodiment of the present invention;

FIG.4 shows a correspondence relationship between SINR segments and the numbers of retransmission bits according to an embodiment of the present invention; and

FIG.5 shows a performance comparison between a transmission method according to the present invention and a retransmission method of the related art.

Best Mode for Carrying Out the Invention

An embodiment of the present invention will be described in detail below with reference to the accompanying drawings.

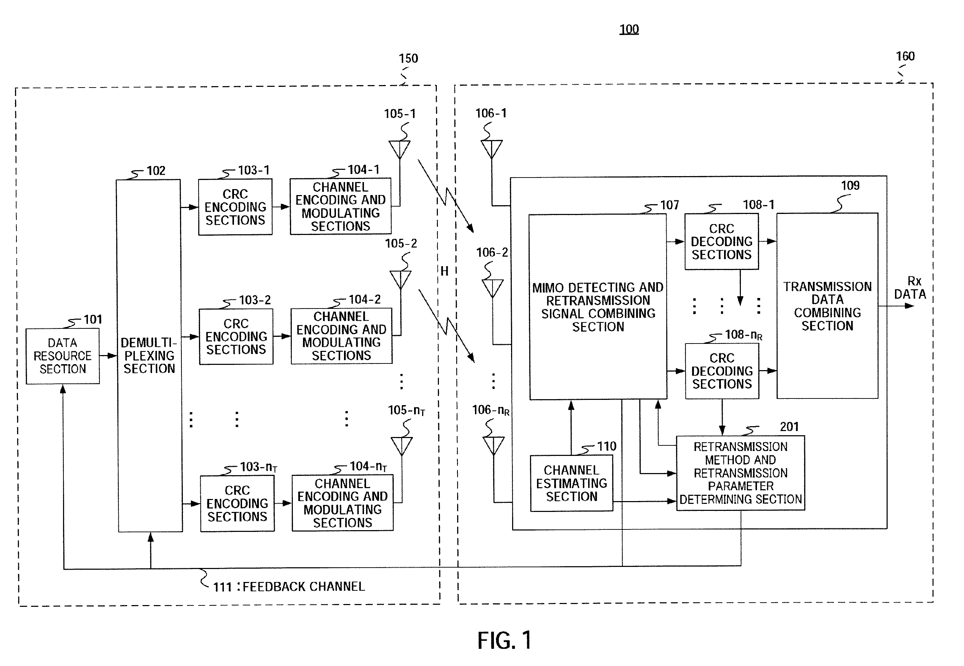

FIG.1 is a block diagram showing a configuration of MIMO radio communication system 100 according to an embodiment of the present invention. MIMO radio communication system 100 is an example of a multi-antenna radio communication system according to the present invention.

In FIG. 1, MIMO radio communication system 100 is configured with radio transmitting apparatus 150 that carries out transmission using $n_T$ transmitting antennas, and radio receiving apparatus 160 that carries out reception using $n_R$ receiving antennas. Radio transmitting apparatus 150 is provided with data resource section 101, Demultiplexing section 102, CRC encoding sections 103-1 to 103$n_T$, channel encoding and modulating sections 104-1 to 104-$n_T$ and transmitting antennas 105-1 to 105-$n_T$. Radio receiving apparatus 160 is configured with receiving antennas 106-1 to 106-$n_R$, MIMO detecting and retransmission signal combining section 107, CRC decoding sections 108-1 to 108-$n_R$, channel estimating section 110 and retransmission method and retransmission parameter determining section 201. In the following, at radio transmitting apparatus 150, CRC encoding sections 103-1 to 103-$n_T$ will be referred to as CRC encoding section 103, channel encoding and modulating sections 104-1 to 104-$n_T$ will be referred to as channel encoding and modulating section 104, and transmitting antennas 105-1 to 105-$n_T$ will be referred to as transmitting antenna 105. Further, at radio receiving apparatus 160, receiving antennas 106-1 to 106-$n_R$ will be referred to as receiving antenna 106, and CRC decoding sections 108-1 to 108-$n_R$ will be referred to as CRC decoding section 108.

At radio transmitting apparatus 150, data resource section 101 is a source of providing transmission data transmitted by radio transmitting apparatus 150, and outputs the transmission data to Demultiplexing section 102. Data resource section 101 refers to feedback information relating to retransmission fed back from radio receiving apparatus 160 and determines transmission data outputted to Demultiplexing section 102.

Demultiplexing section 102 demultiplexes transmission data inputted from data resource section 101 into $n_T$ sub-streams and outputs the sub-streams to CRC encoding sections 103-1 to 103-$n_T$. Each obtained sub-stream corresponds to one transmitting antenna 105. Demultiplexingsection102referstofeedbackinformation relating to retransmission fed back from radio receiving apparatus 160 and associates the retransmitting antennas with the sub-streams.

CRC encoding sections 103-1 to 103-$n_T$ carry out CRC encoding on the sub-streams inputted from Demultiplexing section 102 and output the encoded sub-streams to channel encoding and modulating sections 104-1 to 104-$n_T$. CRC encoding is processing for appending several CRC bits to the end of each transmission data. Radio receiving apparatus 160 that receives sub-streams to which the CRC bits are appended detects whether or not there are errors in the sub-streams based on the CRC bits.

Channel encoding and modulating sections 104-1 to 104-$n_T$ carry out channel encoding and modulation on the sub-streams and output the modulated sub-streams to transmitting antennas 105-1 to 105-$n_T$.

At radio receiving apparatus 160, $n_R$ receiving antennas 106 receive space multiplexed signals. Channel estimating section 110 carries out channel estimation based on a pilot signal in the received signals or using other methods and obtains channel estimation matrix H (channel characteristics for the MIMO system can be expressed using a single matrix). Channel estimating section 110 outputs obtained channel estimation matrix H to MIMO detecting and retransmission signal combining section 107 and retransmission method and retransmission parameter determining section 201.

MIMO detecting and retransmission signal combining section 107 carries out MIMO detection processing on the signals received by receiving antenna 106 using channel estimation matrix H obtained by channel estimating section 110. Further, MIMO detecting and retransmission signal combining section 107 carries out combining processing on different versions of the same signal retransmitted several times. Namely, MIMO detecting and retransmission signal combining section 107 has two functions: a function for MIMO detection; and a function for combining retransmission signals. Specifically, MIMO detecting and retransmission signal combining section 107 first determines whether or not the received signal is retransmission data, and then carries out the processing described below in (1) or (2). (1) When the received sub-stream is not retransmission data, but is data transmitted for the first time, MIMO detecting and retransmission signal combining section 107 only carries out MIMO detection processing on the sub-stream. There are many methods as methods (MIMO detection methods) used in MIMO detection processing. For example, a ZF (Zero Forcing) method, an MMSE (Minimum Mean Square Error) method, and an SIC (Successive Interference Cancellation) method are typically used methods. In MIMO detection, first, the sub-streams transmitted by transmitting antennas 105-1 to 105-$n_T$ of radio transmitting apparatus 150 are separated from the received signal using the detection method as described above. Next, demodulation and decoding processing is carried out on each sub-stream based on AMC parameters used in each sub-stream. (2) When the received signal includes a retransmission sub-stream, that is, when the received signal includes the sub-stream because the signal received previously cannot be received correctly, MIMO detecting and retransmission signal combining section 107 carries out MIMO detection processing on the received signal. Further, MIMO detecting and retransmission signal combining section 107 carries out combining processing with version signals transmitted previously on the retransmission sub-stream. Specifically, for example, when sub-stream s out of the received signal is an Nth transmission, signals obtained by transmitting the sub-stream up to N times and performing MIMO detection on the sub-stream are indicated as $r_1$, $r_2$, ..., rN, respectively. Here, $r_1$ is a signal where sub-stream s is transmitted first time and MIMO detection is performed, and $r_2$, ..., $r_N$ are signals where sub-stream s is retransmitted and MIMO detection is performed. On the receiving side, signal $r_N$ where sub-stream s is transmitted the Nth time and MIMO detection is performed, and signals $r_1$, $r_2$, $r_{N-1}$ for each version obtained in reception processing up to the N-1th time previously are combined, and $r=(r_1 + r_2 + ... + r_N)*1/N$ is obtained. Next, MIMO detecting and retransmission signal combining section 107 demodulates and decodes obtained r, and outputs the sub-streams after decoding to CRC decoding sections 108-1 to 108-$n_T$ and to retransmission method and retransmission parameter determining section 201.

CRC decoding sections 108-1 to 108-$n_T$ each carry out CRC decoding on the sub-streams inputted from MIMO detecting and retransmission signal combining section 107. Namely, CRC decoding sections 108-1 to 108-$n_T$ each detect whether or not each sub-stream includes an error bit, and generates an acknowledgement (ACK) or non-acknowledgement (NAK) signal as a retransmission response signal. Retransmission response signals ACK and NAK indicate two cases: the case where the sub-stream includes an error bit; and the case where the sub-stream does not include an error bit. In the following, a sub-stream including an error bit is referred to as a retransmission sub-stream. Each CRC decoding section 108 outputs the generated retransmission response signal (ACK or NAK) to retransmission method and retransmission parameter determining section 201 and transmission data combining section 109, and transmits feedback to radio transmitting apparatus 150 via retransmission method and retransmission parameter determining section 201 through feedback channel 111.

The retransmission response signal fed back from CRC decoding section 108 is used to carry out a retransmission operation at radio transmitting apparatus 150. When the retransmission response signal is ACK, the sub-stream may be correctly received, and the next new sub-stream can be transmitted in transmission processing for the next time. On the other hand, when the retransmission response signal is NAK, the sub-stream is not correctly received, and therefore the sub-stream is transmitted one more time in the next transmission processing. At radio transmitting apparatus 150, the original transmitting antenna may be used upon retransmission of a sub-stream, or the transmitting antenna may be changed under the control of Demultiplexing section 102.

When an error bit is not included in the CRC decoded sub-stream, CRC decoding section 108 deletes the CRC bits appended to the end of the information bits of the CRC decoded sub-stream and outputs the sub-stream to transmission data combining section 109.

Transmission data combining section 109 then combines a plurality of sub-streams from which the CRC bits are deleted by CRC decoding section 108 and obtains the received data (Rx data).

Retransmission method and retransmission parameter determining section 201 determines a retransmission method and retransmission parameters used in retransmission of a sub-stream requiring retransmission (retransmission sub-stream) out of the sub-streams inputted from MIMO detecting and retransmission signal combining section 107 using channel estimation matrix H estimated by channel estimating section 110 and the retransmission response signal inputted from CRC decoding sections 108-1 to 108-$n_R$. The retransmission method according to the present invention differs from the MIMO retransmission method of the related art in that different retransmission methods and retransmission parameters are adaptively determined for each retransmission sub-stream. The different retransmission methods described above include two types : 1) a method of retransmitting the whole retransmission sub-stream; and 2) an incremental redundancy retransmission method. The first type of retransmission method is the same as the retransmission method used in the MIMO system of the related art, and retransmits the whole sub-stream when an error bit is detected in the sub-stream. The second type of the incremental redundancy retransmission method is a method for retransmitting part of the bits in the sub-stream every time when an error bit is detected in the sub-stream. The retransmission parameters indicate the number of information bits retransmitted each time, and specifically indicate which bits to retransmit when an incremental redundancy retransmission method is used in retransmission of the sub-stream. Retransmission method and retransmission parameter determining section 201 uses the output of channel estimating section 110--channel estimation matrix H--in selection of a retransmission method and retransmission parameters for the retransmission sub-stream. Retransmission method and retransmission parameter determining section 201 feeds back the determined retransmission method and retransmission parameters for each sub-stream to radio transmitting apparatus 150 via feedback channel 111, as well as outputting the retransmission method and retransmission parameters to MIMO detecting and retransmission signal combining section 107 for the next reception processing.

In the above, feedback information relating to retransmission generated at radio receiving apparatus 160 indicates a retransmission response signal (ACK or NAK), retransmitting antenna selection results, results of determining a retransmission method and retransmission parameters, and the like. Further, retransmission sub-stream determining results may also be included in this feedback information.

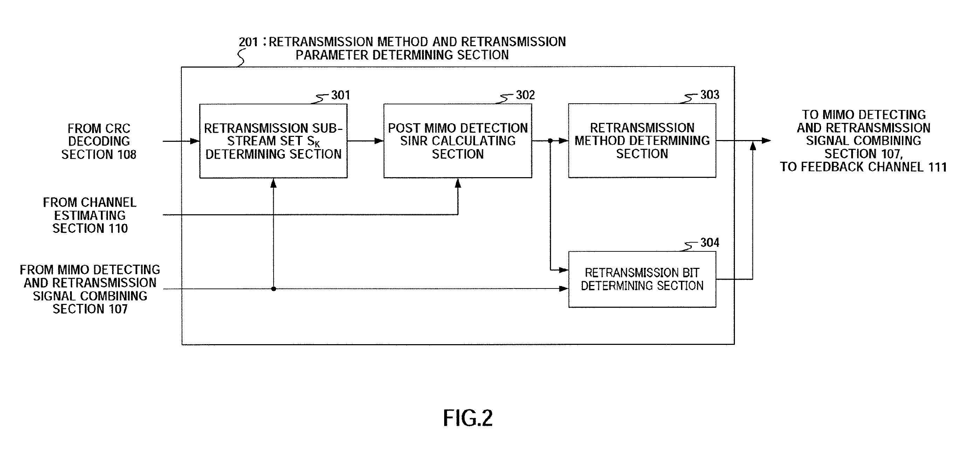

FIG. 2 is a block diagram showing a detailed configuration of a retransmission method and retransmission parameter determining section 201 according to this embodiment.

Retransmission method and retransmission parameter determining section 201 has retransmission sub-stream set $S_k$ determining section 301, post MIMO detection SINR calculating section 302, retransmission method determining section 303 and retransmission bit determining section 304.

Retransmission sub-stream set $S_k$ determining section 301 determines sub-stream (retransmission sub-stream) sets $S_k=\{S_{k1}, S_{k2}, ... \}$ which require retransmission, for each sub-stream inputted from MIMO detecting and retransmission signal combining section 107 based on processing results of CRC decoding section 108.

Next, post MIMO detection SINR calculating section 302 calculates SINR values after MIMO detection and transmission data combining of the sub-streams within retransmission sub-stream set $S_k$ determined by retransmission sub-stream set $S_k$ determining section 301 based on channel estimation matrix H. Namely, $SINR_k=\{SINR_{k1}, SINR_{k2}, ... \}$ is obtained.

Next, retransmission method determining section 303 determines the retransmission method on a per sub-stream basis within retransmission sub-stream set $S_k$ based on output $SINR_k$ of post MIMO detection SINR calculating section 302 and a predetermined SINR threshold value. Specifically, retransmission method determining section determines to use one type of retransmission method--a method of retransmitting the whole retransmission sub-stream--for retransmission sub-stream where the SINR value is lower than a predetermined SINR threshold value, and use of the second type of retransmission method--the incremental redundancy retransmission method--for the retransmission sub-stream where the SINR value is higher than the predetermined SINR threshold value. The method of determining is derived from the considerations described below. The number of error bits included in a sub-stream where the SINR value is lower is larger. In this case, if the incremental redundancy retransmission method is used, it is necessary to feed back to radio transmitting apparatus 150 information relating to the positions of a large number of bits where the reliability is extremely low and that require retransmission. The amount of feedback information is large, and therefore it is difficult to implement an incremental redundancy retransmission method in an actual system. On the other hand, the number of error bits included in the sub-stream where the SINR value is higher is smaller. In this case, if the first type of retransmission method--a method of retransmitting the whole sub-stream--is used, system throughput is wasted. Retransmission method determining section 303 feeds back information indicating the determined retransmission method to radio transmitting apparatus 150 using feedback channel 111 and outputs the information to MIMO detecting and retransmission signal combining section 107.

Next, retransmission bit determining section 304 determines bits to be retransmitted for the sub-stream for which the incremental redundancy retransmission method is determined to be used. Specifically, retransmission bit determining section 304 first determines the number of retransmission information bits based on the SINR value of the sub-stream. In the retransmission method of the present invention, a predetermined SINR is divided in advance into a plurality of segments, and the different numbers of retransmission bits are associated with the different SINR segments. The number of retransmission bits corresponding to segments of higher SINR value is smaller, and the number of retransmission bits corresponding to segments of lower SINR value is larger. When the number of information bits to be retransmitted is determined, retransmission bit determining section 304 specifically determines bits to be retransmitted based on the reliability of each bit within the sub-stream. Methods of determining bits to be retransmitted include a method where reliability of each information bit within the sub-stream is estimated and the determined number of information bits is selected in ascending order of the reliability.

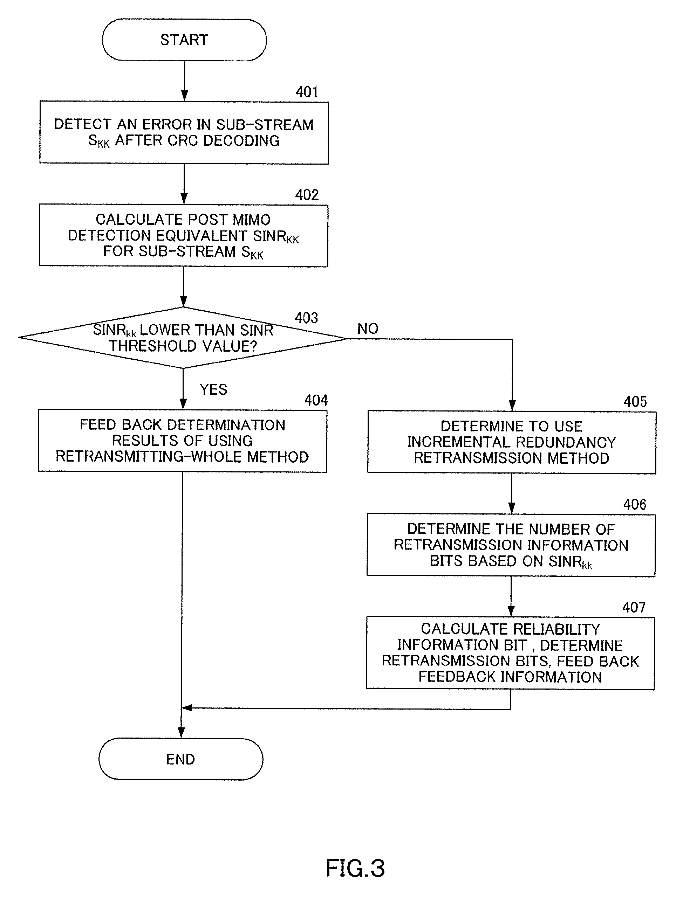

FIG.3 is a flowchart showing processing of a retransmission method in retransmission method and retransmission parameter determining section 201 according to this embodiment. Here, a description is given assuming that a transmission sub-stream set transmitted from $n_T$ transmitting antennas of radio transmitting apparatus 150 of MIMO radio communication system 100 is S = $\{S_1, S_2,..., S_{nT}\}$.

In step 401, retransmission sub-stream set $S_k$ determining section 301 determines retransmission sub-stream set $S_k=\{S_{k1}, S_{k2}, ...\}$ based on CRC decoding results for each sub-stream of transmission sub-stream set $S_k$. Here, out of these, one retransmission sub-stream is taken as an example and indicated as $S_{kk}$.

Next, in step 402, post MIMO detection SINR calculating section 302 calculates equivalent SINR after performing MIMO detection on retransmission sub-stream $S_{kk}$, and describes the equivalent SINR as $SINR_{kk}$. The equivalent SINR can be logically calculated based on channel estimation matrix H obtained by channel estimation and an MIMO detection method used by MIMO detecting and retransmission signal combining section 107 or can be obtained by actually measuring a signal after MIMO detection. When retransmission sub-stream $S_{kk}$ is not first transmission, an equivalent SINR is taken as a value not just subjected to MIMO detection processing but also subjected to retransmission signal combining processing.

Next, in step 403, retransmission method determining section 303 determines the retransmission method corresponding to retransmission sub-stream $S_{kk}$ based on $SINR_{kk}$. Specifically, retransmission method determining section 303 compares $SINR_{kk}$ and predetermined SINR threshold value SINR_0, and, when $SINR_{kk}$ is lower than SINR_ 0, determines the first type, that is, the method of retransmitting the whole retransmission sub-stream. The retransmission method processing then shifts to step 404. When $SINR_{kk}$ is not lower than SINR_0, the second type--the incremental redundancy retransmission method--is selected, and the retransmission method processing shifts to step 405.

When $SINR_{kk}$ is lower than SINR_0, in step 404, retransmission method determining section 303 determines to use the method of retransmitting the whole retransmission sub-stream $S_{kk}$. Retransmission method determining section 303 then requests to radio transmitting apparatus 150 retransmission of the whole retransmission sub-stream $S_{kk}$ by feeding back the determination results to radio transmitting apparatus 150. Further, retransmission method determining section 303 outputs the determination results to MIMO detecting and retransmission signal combining section 107.

On the other hand, when $SINR_{kk}$ is greater than SINR_0, in step 405, retransmission method determining section 303 determines to use the incremental redundancy retransmission method for retransmission sub-stream $S_{kk}$.

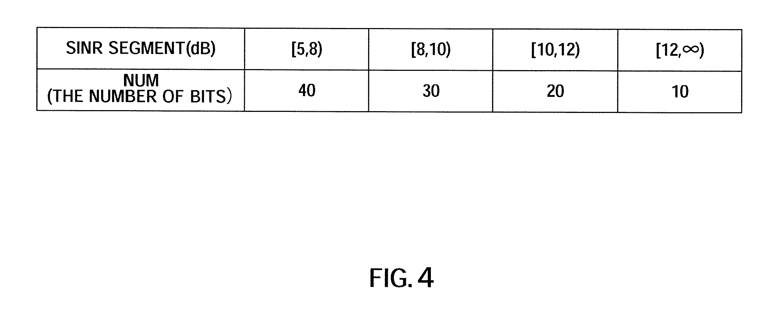

Next, in step 406, retransmission bit determining section 304 determines the number of information bits to be retransmitted next time based on $SINR_{kk}$. In this case, a predetermined SINR is divided in advance into a plurality of segments, and the different numbers of retransmission information bits are associated with different SINR segments. The number of retransmission information bits corresponding to the SINR segments including SINR value $SINR_{kk}$ of retransmission sub-stream $S_{kk}$ is taken as the number of information bits for the next retransmission of retransmission sub-stream $S_{kk}$. Here, the number of retransmission information bits is indicated as $NUM_{kk}$. For example, retransmission bit determining section 304 refers to a correspondence relationship between the SINR segments and the numbers of retransmission information bits shown in FIG.4 and determines the number of retransmission information bits $NUM_{kk}$.

Next, in step 407, retransmission bit determining section 304 selects specific retransmission bits corresponding to retransmission sub-stream $S_{kk}$. Specifically, retransmission bit determining section 304 sequentially carries out processing of (a) and (b) described below.

(a) Retransmission bit determining section 304 estimates post reception reliability $\alpha_1$ (1 = 1,..., L) of each information bit in retransmission sub-stream $S_{kk}$. Here, L indicates the number of information bits in the sub-stream, and $\alpha1$ indicates post reception reliability of the first information bit in sub-stream $S_{kk}$. Regarding the logic, reliability $\alpha$ of each information bit can be expressed by the following equation 1.
[1]

$$\alpha = |LLR| = \left| \ln \frac{p(b=1|r)}{p(b=0|r)} \right| \qquad \ldots (\text{Equation 1})$$

Namely, reliability $\alpha$ of each information bit can be expressed using an absolute value for a log likelihood ratio (LLR) of the bit. In an actual system, retransmission bit determining section 304 directly uses an absolute value for a soft decision of a decoder as reliability $\alpha$ of each bit.

(b) Retransmission bit determining section 304 determines $NUM_{kk}$ information bits in ascending order of reliability within retransmission sub-stream $S_{kk}$ and feeds back information relating to determination results to radio transmitting apparatus 150 using feedback channel 111. Radio transmitting apparatus 150 carries out retransmission on the selected $NUM_{kk}$ information bits at the next transmission. Next, retransmission method determining section 303 requests to radio transmitting apparatus 150 incremental redundancy retransmission for retransmission sub-stream $S_{kk}$ by feeding back determination results indicating use of the incremental redundancy retransmission for retransmission sub-stream $S_{kk}$ and specific retransmission parameters to radio transmitting apparatus 150. Further, retransmission method determining section 303 outputs determination results and specific retransmission parameters to MIMO detecting and retransmission signal combining section 107.

In this way, FIG.3 shows processing for determining the retransmission method and specific retransmission bits for one retransmission sub-stream $S_{kk}$. Retransmission method and retransmission parameter determining section 201 determines the retransmission method and specific retransmission parameters for all the retransmission sub-streams included in retransmission sub-stream set $S_k\{S_{k1}, S_{k2},...\}$ by repeating the processing shown in FIG. 3. Retransmission method and retransmission parameter determining section 201 may also feed back the determination results to radio transmitting apparatus 150 and output the determination results to MIMO detecting and retransmission signal combining section 107 after determining the retransmission method and retransmission parameters for all the retransmission sub-streams. Here, when it is determined to use the incremental redundancy retransmission method, information relating to the position of each bit requiring retransmission in retransmission data sub-stream $S_{kk}$ is included in the feedback information.

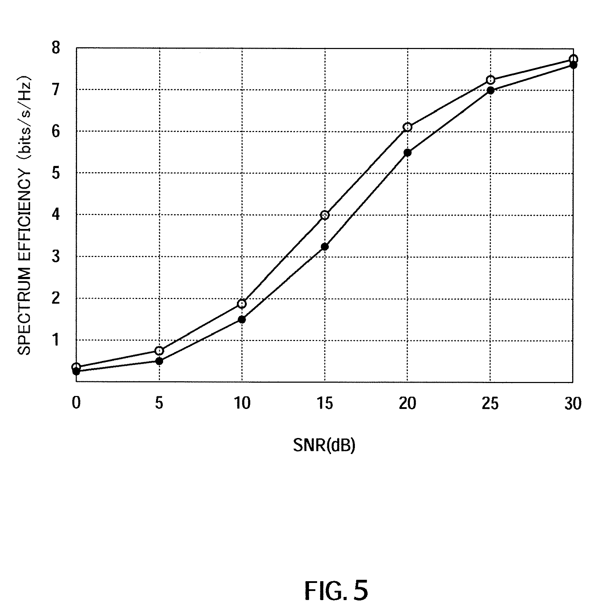

FIG.5 shows a comparison of the performance between the adaptive retransmission method according to the present invention and the retransmission method of the related art. In this drawing, the graph shown using "•" indicates spectrum efficiency obtained in each SNR when a retransmission method of the related art is used, and the graph shown using "o" shows spectrum efficiency obtained in each SNR when the adaptive retransmission method according to the present invention is used.

In a simulation for this performance comparison, there are four transmitting antennas 105 and four receiving antennas 106. Further, a flat attenuation channel is used as a channel, and QPSK modulation is used as a modulation scheme. Moreover, one sub-stream includes 1000 modulation symbols. Further, ZF detection is used as a MIMO detection method. The SINR threshold value used to determine the retransmission method in the simulation is 5 dB. Further, in incremental redundancy retransmission, there is only one case of one type of a 40-bit feedback procedure. As can be understood from the results shown in FIG.5, compared to the method of the related art, if the method proposed in this application is used, it is possible to obtain better spectrum efficiency.

In this way, according to this embodiment, in the multi-antenna radio communication system, when an error is detected in the received sub-stream, the sub-stream is determined to be a retransmission sub-stream, and an SINR of the retransmission sub-stream is compared with a predetermined threshold value. When the SINR of the retransmission sub-stream is higher than a predetermined threshold value, the number of error bits included in the retransmission sub-stream is small. The radio receiving apparatus therefore determines to use the incremental redundancy retransmission method, determines the number of part of the information bits to be retransmitted and the specific positions within the sub-stream of these information bits, and feeds back this number and position information to the radio transmitting apparatus. The radio retransmitting apparatus retransmits the part including information bits that cannot be received correctly by the radio receiving apparatus based on the fed back information, and the duplicate retransmission of the information bits that are correctly received can be reduced, so that it is possible to improve system throughput from the transmitting side to the receiving side. On the other hand, when the SINR of the retransmission sub-stream is lower than a predetermined threshold value, the number of error bits included in the retransmission sub-stream is large, and therefore the radio receiving apparatus determines the method of retransmitting the whole retransmission sub-stream. As a result, it is possible to avoid feedback of a large amount of information relating to a large number of error bits and improve the system throughput.

The retransmission method and radio receiving apparatus of the multi-antenna radio communication system according to the present invention is by no means limited to each of the above embodiments, and implementation of various modifications is possible.

The radio receiving apparatus according to the present invention can be provided on a communication terminal apparatus and a base station apparatus of a multi-antenna radio communication system, and it is thereby possible to provide a communication terminal apparatus, base station apparatus and mobile communication system having the same operation effects as described above.

Here, the case has been described as an example where the present invention is configured with hardware, but the present invention may be implemented with software. For example, it is possible to implement the same functions as the radio receiving apparatus according to the present invention by describing an algorithm of the retransmission method according to the present invention using a programming language, storing this program in a memory, and making an information processing section implement the program.

In a further aspect of the present invention, an adaptive retransmission method and equipment in a multi-antenna communication system are proposed that are capable of further improving retransmission performance in multi-antenna transmission.

Another aspect of the present invention is an adaptive retransmission method and equipment in a multi-antenna communication system, and, in the adaptive retransmission method and equipment, a retransmission method and retransmission parameters are adaptively selected based on an SINR of a sub-stream requiring retransmission.

In a further aspect of the present invention, in the above aspects, a retransmission method and retransmission parameters to be used are adaptively selected based on channel characteristics of the retransmission sub-stream.

A still further aspect of the present invention is an adaptive retransmission method in a multi-antenna communication system, and in the adaptive retransmission method a receiving apparatus executes the steps of: detecting whether or not there is an error and retransmission is necessary in a received sub-stream; calculating an equivalent signal to interference noise ratio after multi-input and multi-output detection of the sub-stream requiring retransmission; and comparing a signal to interference noise ratio of the sub-stream requiring retransmission with a predetermined threshold value, and, when the signal to interference noise ratio of the sub-stream requiring retransmission is lower than a predetermined threshold value, carrying out retransmission of the whole sub-stream requiring retransmission, and, when the signal to interference noise ratio of the sub-stream requiring retransmission is higher than a predetermined threshold value, carrying out incremental redundancy retransmission processing on the sub-stream requiring retransmission.

In a further aspect of the present invention, in the above aspects, the incremental redundancy retransmission processing includes the steps of: setting the number of retransmission bits corresponding to a signal to interference noise ratio; determining the number of bits requiring retransmission in the retransmission sub-stream based on the signal to interference noise ratio for the sub-stream requiring retransmission; determining the positions of bits requiring retransmission based on reception reliability of each bit in the sub-stream and the number of retransmission bits; and feeding back feedback information including information relating to the determined positions of bits requiring retransmission to a transmitting apparatus.

In another aspect of the present invention, in the above aspects, the transmitting apparatus executes the steps of: receiving and acquiring information relating to the positions of bits requiring retransmission included in the feedback information transmitted from the receiving apparatus; and carrying out incremental redundancy retransmission processing for the sub-stream based on the positions of bits requiring retransmission.

In a still further aspect of the present invention, in the above aspects, when the sub-stream is a sub-stream transmitted for the first time, the equivalent signal to interference noise ratio is the signal to interference noise ratio after MIMO detection, and, when the sub-stream is a retransmission sub-stream, the equivalent signal to interference noise ratio is a signal to interference noise ratio after retransmission combining.

In another aspect of the present invention, in the above aspects, the step of setting the number of retransmission bits corresponding to the signal to interference noise ratio is carried out by dividing the signal to interference noise ratio into a plurality of signal to interference noise ratio segments, associating the signal to interference noise ratio segments with the different numbers of retransmission information bits, respectively, and setting smaller number of retransmission information bits for a higher signal to interference noise ratio.

In a still further aspect of the present invention, in the above aspects, the step of determining the positions of bits requiring retransmission directly uses an absolute value for a soft decision of a decoder as a reliability value for each bit of a sub-stream requiring retransmission, and selects the positions of information bits where the number is equal to the determined number of retransmission bits in ascending order of the reliability values within the whole sub-stream requiring retransmission based on reception reliability of each bit in the sub-stream and the determined number of retransmission information bits.

In a further aspect of the present invention is a receiving side equipment that carries out adaptive retransmission in a multi-antenna communication system, including: a channel estimation block that carries out channel estimation; a multi-input and multi-output detection and retransmission combining block that detects a signal received at each antenna, using the channel estimation results, and carries out combining processing on versions of the same signal retransmitted several times; a CRC decoding block that detects whether or not there is an error bit in a received sub-stream and retransmission is necessary; and a retransmission method and retransmission parameter determining block that compares a signal to interference noise ratio of the sub-stream requiring retransmission with a predetermined threshold value, and, when the signal to interference noise ratio of the sub-stream requiring retransmission is lower than the predetermined threshold value, retransmits the whole sub-stream requiring retransmission, and, when the signal to interference ratio of the sub-stream requiring retransmission is higher than the predetermined threshold value, carries out incremental redundancy retransmission on the sub-stream requiring retransmission.

In another aspect of the present invention, in the above aspects, the retransmission method and retransmission parameter determining block is provided with: a determining block that determines a sub-stream requiring retransmission this time based on an output of a CRC decoding block; a calculating block that calculates an equivalent signal to interference noise ratio after multi-input and multi-output detection of the sub-stream requiring retransmission; and a retransmission method selection block that compares a signal to interference noise ratio of the sub-stream requiring retransmission with a predetermined threshold value, and, when the signal to interference noise ratio of the sub-stream requiring retransmission is lower than a predetermined threshold value, retransmits the whole sub-stream requiring retransmission, and, when the signal to interference noise ratio of the sub-stream requiring retransmission is higher than a predetermined threshold value, carries out incremental redundancy retransmission on the sub-stream requiring retransmission.

In a still further aspect of the present invention, in the above aspects, the receiving side equipment further includes: a retransmission bit determining block that determines the number of bits requiring retransmission in the sub-stream requiring retransmission based on a signal to interference noise ratio of the sub-stream requiring retransmission, determines positions of bits requiring retransmission based on the recetpion reliability of each bit in the sub-stream and the determined number of retransmission bits, and feeds back feedback information including information relating to the determined positions of bits requiring retransmission to the radio transmitting apparatus.

In an even further aspect of the present invention, in the above aspects, the retransmission bit determining block directly uses an absolute value for a soft decision of a decoder as a reliability value for each bit of the sub-stream requiring retransmission, and selects the positions of information bits where the number is equal to the determined number of retransmission bits in ascending order of the reliability values within the whole sub-stream.

The present application is based on Chinese Patent Application No.200510054755.0, filed on March 11, 2005, entire content of which is expressly incorporated by reference herein.

Industrial Applicability

The retransmission method, radio receiving apparatus, and multi-antenna radio communication system according to the present invention can be applied to use such as retransmission in a multi-antenna radio communication system.

**Claims**

1. A retransmission method comprising:

    a determining step of detecting an error in a received sub-stream and determining the sub-stream as a sub-stream requiring retransmission when there is an error in the sub-stream;
    a calculating step of calculating a signal to interference noise ratio after multi-input and multi-output detection of the sub-stream requiring retransmission; and
    a requesting step of comparing the calculated signal to interference noise ratio of the sub-stream requiring retransmission withapredeterminedthreshold value,and, when the signal to interference noise ratio of the sub-stream requiring retransmission is lower than the predetermined threshold value, requesting retransmission of the whole sub-stream requiring retransmission to a transmitting side, and, when the signal to interference noise ratio of the sub-stream requiring retransmission is higher than the predetermined threshold value, requesting incremental redundancy retransmission to the transmitting side for the sub-stream requiring retransmission.

2. The retransmission method according to claim 1, further comprising:

    in the case of requesting a retransmission method of the incremental redundancy retransmission method in the requesting step:

        a step of determining the number of bits requiring retransmission in the retransmission sub-stream as the number of retransmission bits based on information where a predetermined signal to interference noise ratio is associated with the number of retransmission bits, and the signal to interference noise ratio for the sub-stream requiring retransmission;
        a step of calculating reception reliability for each bit in the sub-stream requiring retransmission, and determining positions of bits requiring retransmission based on the calculated reception reliability of each bit and the determined number of retransmission bits; and
        a step of feeding back feedback information including information relating to positions of determined bits requiring retransmission to a transmitting apparatus.

3. The retransmission method according to claim 1, further comprising:

    a step of receiving and acquiring information relating to the positions of bits requiring retransmission included in the fed back feedback information; and
    a step of carrying out incremental redundancy retransmission processing on the sub-stream requiring retransmission based on the information relating to the positions of bits requiring retransmission.

4. The retransmission method according to claim 1, wherein, in the calculating step of calculating the signal to interference noise ratio of the sub-stream requiring retransmission after multi-input and multi-output detection, when the sub-stream requiring retransmission is transmitted for a first time, the signal to interference noise ratio is a signal to interference noise ratio after MIMO detection, and, when the sub-stream requiring retransmission is a retransmission sub-stream, the signal to interference noise ratio is a signal to interference noise ratio after retransmission signal combining.

5. The retransmission method according to claim 2, wherein, in the step of determining the retransmission method of the incremental redundancy retransmission, the information where the predetermined signal to interference noise ratio is associated with the number of retransmission bits is information where a predetermined signal to interference noise ratio is divided into a plurality of signal to interference noise ratio segments and the different number of retransmission information bits are associated with the signal to interference noise ratio segments so that the number of information bits requiring retransmission is smaller for a higher signal to interference noise ratio.

6. The retransmission method according to claim 2, wherein, in the step of calculating reception reliability for each bit in the sub-stream requiring retransmission and determining positions of bits requiring retransmission based on reception reliability calculated for each bit and the determined number of retransmission bits, an absolute value for a soft decision of a decoder is directly used as a reliability value for each bit of the sub-stream requiring retransmission, and positions of information bits where the number is equal to the determined number of retransmission bits are determined in ascending order of the reliability values within the whole sub-stream requiring retransmission.

7. A radio receiving apparatus used in a multi-antenna communication system, comprising:

   a channel estimation block that carries out channel estimation;
   a multi-input and multi-output detection and retransmission signal combining block that detects a sub-stream from a signal received at each antenna, using the channel estimation results and carries out combining processing for versions of the same signal retransmitted several times;
   a CRC decoding block that detects an error bit in the detected sub-stream and determines the sub-stream where an error bit is detected as a sub-stream requiring retransmission; and
   a retransmission method and retransmission parameter determining block that calculates a signal to interference noise ratio of the sub-stream requiring retransmission and compares the signal to interference noise ratio with a predetermined threshold value, and, when the signal to interference noise ratio of the sub-stream requiring retransmission is lower than the predetermined threshold value, requests retransmission of the whole sub-stream requiring retransmission to a transmitting side, and, when the signal to interference ratio of the sub-stream requiring retransmission is higher than the predetermined threshold value, requests incremental redundancy retransmission to the transmitting side for the sub-stream requiring retransmission.

8. The radio receiving apparatus according to claim 7, wherein the retransmission method and retransmission parameter determining block comprises:

   a calculating block that calculates a signal to interference noise ratio after multi-input and multi-output detection of the sub-stream requiring retransmission; and
   a retransmission method determining block that compares the calculated signal to interference noise ratio of the sub-stream requiring retransmission with a predetermined threshold value, and, when the signal to interference noise ratio of the sub-stream requiring retransmission is lower than the predetermined threshold value, requests retransmission of the whole sub-stream requiring retransmission to the transmitting side, and, when the signal to interference ratio of the sub-stream requiring retransmission is higher than the predetermined threshold value, requests incremental redundancy retransmission to the transmitting side for the sub-stream requiring retransmission.

9. The radio receiving apparatus according to claim 8, further comprising a retransmission determining block that determines a number of bits requiring retransmission in the sub-stream requiring retransmission as a number of retransmission bits based on the signal to interference noise ratio of the sub-stream requiring retransmission, calculates reception reliability of each bit within the sub-stream requiring retransmission, determines positions of bits requiring retransmission based on the determined number of retransmission bits, and feeds back feedback information including information relating to the determined positions of bits requiring retransmission to the radio transmitting apparatus.

10. The radio receiving apparatus according to claim 9, wherein the retransmission bit determining block directly uses an absolute value for a soft decision of a decoder as a reliability value for each bit of the sub-stream requiring retransmission, and determines positions of information bits where the number is equal to the determined number of retransmission bits in ascending order of the reliability values within the whole sub-stream requiring retransmission.

11. A multi-antenna radio communication system comprising a radio transmitting apparatus that transmits a plurality of sub-streams using a plurality of transmitting antennas and a radio receiving apparatus that receives the plurality of sub-streams using a plurality of receiving antennas, wherein:

the radio receiving apparatus comprises:

a detection section that detects a sub-stream requiring retransmission out of the received plurality of sub-streams;

a comparing section that compares an SINR of the sub-stream requiring retransmission with a predetermined threshold value;

a determining section that determines a method of retransmitting the whole sub-stream requiring retransmission when the SINR of the sub-stream requiring retransmission is lower than the predetermined threshold value, and determines an incremental redundancy retransmission method for the sub-stream requiring retransmission when the SINR of the sub-stream requiring retransmission is higher than the predetermined threshold value; and

a reporting section that reports information relating to the determined retransmission method to the radio transmitting apparatus; and

the radio transmitting apparatus comprises a retransmission section that adaptively retransmits the whole or part of the sub-stream requiring retransmission based on information relating to the retransmission method reported from the radio receiving apparatus.

FIG. 1

EP 1 852 992 A1

201 : RETRANSMISSION METHOD AND RETRANSMISSION
PARAMETER DETERMINING SECTION

FROM CRC
DECODING
SECTION 108

FROM CHANNEL
ESTIMATING
SECTION 110

FROM MIMO DETECTING
AND RETRANSMISSION
SIGNAL COMBINING
SECTION 107

301
RETRANSMISSION SUB-
STREAM SET $S_K$
DETERMINING SECTION

302
POST MIMO DETECTION
SINR CALCULATING
SECTION

303
RETRANSMISSION
METHOD DETERMINING
SECTION

304
RETRANSMISSION BIT
DETERMINING SECTION

TO MIMO DETECTING
AND RETRANSMISSION
SIGNAL COMBINING
SECTION 107,
TO FEEDBACK CHANNEL 111

EP 1 852 992 A1

FIG.2

START

401

DETECT AN ERROR IN SUB-STREAM
$S_{KK}$ AFTER CRC DECODING

402

CALCULATE POST MIMO
DETECTION EQUIVALENT $SINR_{KK}$
FOR SUB-STREAM $S_{KK}$

403

$SINR_{kk}$ LOWER THAN SINR
THRESHOLD VALUE?

NO

YES

404

FEED BACK DETERMINATION
RESULTS OF USING
RETRANSMITTING-WHOLE METHOD

405

DETERMINE TO USE
INCREMENTAL REDUNDANCY
RETRANSMISSION METHOD

406

DETERMINE THE NUMBER OF
RETRANSMISSION INFORMATION
BITS BASED ON $SINR_{kk}$

407

CALCULATE RELIABILITY
INFORMATION BIT , DETERMINE
RETRANSMISSION BITS, FEED BACK
FEEDBACK INFORMATION

END

FIG.3

| SINR SEGMENT(dB) | [5,8) | [8,10) | [10,12) | [12,∞) |
|---|---|---|---|---|
| NUM<br>(THE NUMBER OF BITS) | 40 | 30 | 20 | 10 |

FIG. 4

EP 1 852 992 A1

FIG. 5

**INTERNATIONAL SEARCH REPORT**

International application No.

PCT/JP2006/304899

A.   CLASSIFICATION OF SUBJECT MATTER
*H04J15/00*(2006.01), *H04L1/16*(2006.01), *H04L1/18*(2006.01), *H04L1/00*
(2006.01)

According to International Patent Classification (IPC) or to both national classification and IPC

B.   FIELDS SEARCHED

Minimum documentation searched (classification system followed by classification symbols)
H04J15/00, H04L1/00, H04L1/16, H04L1/18

Documentation searched other than minimum documentation to the extent that such documents are included in the fields searched
Jitsuyo Shinan Koho          1922-1996   Jitsuyo Shinan Toroku Koho   1996-2006
Kokai Jitsuyo Shinan Koho    1971-2006   Toroku Jitsuyo Shinan Koho   1994-2006

Electronic data base consulted during the international search (name of data base and, where practicable, search terms used)
IEEE

C.   DOCUMENTS CONSIDERED TO BE RELEVANT

| Category* | Citation of document, with indication, where appropriate, of the relevant passages | Relevant to claim No. |
|---|---|---|
| Y<br>A | JP 2004-135304 A  (Lucent Technologies Inc.),<br>30 April, 2004 (30.04.04),<br>Par. No. [0018]; Fig. 3<br>& KR 4028492 A          & US 2004/006221 A1<br>& EP 1404048 A1 | 1,7,8,11<br>2-6,9,10 |
| Y<br>A | JP 2004-253828 A  (Matsushita Electric<br>Industrial Co., Ltd.),<br>09 September, 2004 (09.09.04),<br>Par. Nos. [0063] to [0128]; Figs. 4 to 18<br>(Family: none) | 1,7,8,11<br>2-6,9,10 |

[X] Further documents are listed in the continuation of Box C.       [ ] See patent family annex.

*     Special categories of cited documents:
"A"   document defining the general state of the art which is not considered   to
      be of particular relevance
"E"   earlier application or patent but published on or after the international filing
      date
"L"   document which may throw doubts on priority claim(s) or which is
      cited to establish the publication date of another citation or other
      special reason (as specified)
"O"   document referring to an oral disclosure, use, exhibition or other means
"P"   document published prior to the international filing date but later than the
      priority date claimed

"T"   later document published after the international filing date or priority
      date and not in conflict with the application but cited to understand
      the principle or theory underlying the invention
"X"   document of particular relevance; the claimed invention cannot be
      considered novel or cannot be considered to involve an inventive
      step when the document is taken alone
"Y"   document of particular relevance; the claimed invention cannot be
      considered to involve an inventive step when the document is
      combined with one or more other such documents, such combination
      being obvious to a person skilled in the art
"&"   document member of the same patent family

Date of the actual completion of the international search
      17 May, 2006 (17.05.06)

Date of mailing of the international search report
      30 May, 2006 (30.05.06)

Name and mailing address of the ISA/
      Japanese Patent Office

Authorized officer

Facsimile No.

Telephone No.

Form PCT/ISA/210 (second sheet) (April 2005)

**INTERNATIONAL SEARCH REPORT**

International application No.

PCT/JP2006/304899

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2003-143645 A (Lucent Technologies Inc.), 16 May, 2003 (16.05.03), Full text; all drawings & US 2003/0076783 A1    & EP 1304825 A1 | 1-11 |
| A | JP 2003-124915 A (Lucent Technologies Inc.), 25 April, 2003 (25.04.03), Full text; all drawings & US 2003/0066004 A1    & KR 3026864 A & EP 1298829 A1 | 1-11 |
| A | WO 2004/038986 A2 (QUALCOMM INC.), 06 May, 2004 (06.05.04), Full text; all drawings & US 2004/00120411 A1    & US 2004/0081073 A1 & US 2004/00811311 A1    & US 2004/0085939 A1 & US 2004/0087324 A1    & US 2004/0136349 A1 & US 2004/00137863 A1    & US 2004/00146018 A1 & US 2004/00156328 A1    & US 2004/00179627 A1 & US 2004/00128953 A1    & EP 1556981 A & EP 1556980 A    & EP 1556983 A & EP 1556984 A    & EP 1556985 A & EP 1557003 A    & EP 1557017 A & EP 1557022 A    & EP 1559209 A & EP 1559209 A    & EP 1559231 A & EP 1582032 A    & WO 2004/038951 A2 & WO 2004/038952 A2    & WO 2004/038984 A2 & WO 2004/038985 A2    & WO 2004/038987 A2 & WO 2004/038988 A2    & WO 2004/038989 A2 & WO 2004/039011 A2    & WO 2004/039022 A2 & WO 2004/039027 A2 | 1-11 |
| A | Pal Frenger et.al., Performance comparison of HARQ with Chase combining and incremental redundancy for HSDPA, Vehicular Technology Conference 2001 Fall, Vol.3, 2001.10, pages 1829 to 1833 | 1-11 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200510054755